Europäisches Patentamt

(19) European Patent Office  (11) Numéro de publication: **0 019 497**

Office européen des brevets  **B1**

(12)  **FASCICULE DE BREVET EUROPEEN**

(45) Date de publication du fascicule du brevet: **20.06.84**  (51) Int. Cl.³: **B 29 C 27/00, B 65 D 6/00**

(21) Numéro de dépôt: **80400480.2**

(22) Date de dépôt: **10.04.80**

(54) **Procédé pour la solidarisation étanche d'un cadre rigide sur le bord d'une coque et conteneurs étanches.**

(30) Priorité: **13.04.79 FR 7909532**

(43) Date de publication de la demande:
**26.11.80 Bulletin 80/24**

(45) Mention de la délivrance du brevet:
**20.06.84 Bulletin 84/25**

(84) Etats contractants désignés:
**AT BE CH DE GB IT LI LU NL SE**

(56) Documents cités:
**DE - A - 2 756 089**
**DE - B - 1 265 399**
**DE - B - 1 947 042**
**DE - U - 1 969 041**
**FR - A - 1 315 945**
**US - A - 3 093 526**

(73) Titulaire: **Lhotellier, Philippe**
**8 Quai du Cher**
**F-41400 Montrichard (FR)**
(73) Titulaire: **Ricoux, Alain**
**"La Faubourderie"**
**Chissay en Touraine F-41400 Montrichard (FR)**

(72) Inventeur: **Lhotellier, Philippe**
**8 Quai du Cher**
**F-41400 Montrichard (FR)**
Inventeur: **Ricoux, Alain**
**"La Faubourderie"**
**Chissay en Touraine F-41400 Montrichard (FR)**

(74) Mandataire: **Bonnetat, Christian et al,**
**Cabinet PROPI Conseils 23 rue de Léningrad**
**F-75008 Paris (FR)**

## Description

La présente invention concerne un procédé pour la solidarisation étanche d'un cadre rigide sur le bord de l'ouverture d'une coque de matière thermoplastique. Elle s'applique tout particulièrement, quoique non exclusivement, à la réalisation de conteneurs etanches composés de deux coques dont les concavités sont en regard et dont le bord de chacune d'elles est solidarisé d'un cadre rigide, lesdits cadres étant généralement articulés entre eux pour former le dispositif de fermeture desdits conteneurs.

Dans la plupart des conteneurs de ce type connus, les cadres sont fixés aux coques par l'intermédiaire de moyens de fixation traversants, tels que vis ou rivets. Il en résulte que de tels conteneurs ne peuvent être rigoureusement étanches, même si l'on prévoit un joint d'étanchéité entre les cadres, ce qui présente dans certaines conditions d'environnement (humidité notamment) des inconvénients pour des produits, tels que par exemple des munitions, destinés à être enfermés dans ces conteneurs et sensibles auxdites conditions d'environnement.

Par ailleurs, le brevet DE—B—1 265 399 décrit la solidarisation étanche d'un élément rigide sur le bord de l'ouverture d'un corps en matière thermoplastique définissant un volume cylindrique creux ou tuyau. Cet élément rigide présente à sa périphérie une gorge de forme correspondant à celle dudit corps et cette gorge comporte plusieurs parties dont une fait face au volume intérieur du corps et l'autre est tournée vers l'extérieur de ce corps. Selon le procédé décrit dans ce brevet antérieur, le bord du corps cylindrique est introduit dans la gorge en étant alors disposé entre une partie d'élément rigide intérieure au corps cylindrique et une partie d'élément rigide extérieure à ce corps, puis on procède à une élévation de température permettant à la matière du corps cylindrique voisine du bord de fondre et enfin il est procédé au refroidissement.

Cependant, la mise en oeuvre du procédé décrit dans le brevet DE—B—1 265 399 soulève des difficultés et nécessite des plaques chauffantes spéciales. De plus, ce procédé ne peut pratiquement plus être utilisé lorsque l'élément rigide doit être pourvu d'un joint, destiné à coopérer avec un autre élément rigide, par exemple un cadre.

La présente invention a pour objet de remédier aux inconvénients des conteneurs connus. Elle concerne un procédé pour la solidarisation étanche d'un cadre rigide sur le bord d'une coque qui, appliqué à des conteneurs, permet d'obtenir des conteneurs absolument étanches sans nécessiter de dispositifs de chauffage particuliers.

A cette fin, selon l'invention, le procédé pour la solidarisation étanche d'un cadre rigide sur le bord de l'ouverture d'une coque, procédé selon lequel la coque étant en une matière thermoplastique, ledit bord est introduit dans une gorge du cadre de forme correspondante, de façon que ledit bord soit disposé entre une partie de cadre intérieure à la coque et une partie de cadre extérieure à la coque, puis, après mise en place dudit bord de la coque dans la gorge, on procède à une élévation de température permettant à la matière de la coque, voisine du bord, de fondre au moins partiellement, après quoi on laisse cette matière se resolidifier, est caractérisé en ce que, avant la mise en place du bord de la coque dans la gorge du cadre, on introduit dans celle-ci au moins un élément perdu par l'intermédiaire duquel est effectuée, au moins partiellement, l'élévation de température appliquée à la matière de la coque voisine dudit bord.

Ainsi, sans construire de dispositif de chauffage spécial, on solidarise les bords des coques et les cadres, même si ceux-ci sont constitués de profilés de grande épaisseur ou sont pourvus de joints. De plus, on est sûr que le bord fondu de la coque occupe la totalité de la gorge du cadre et donc que l'étanchéité est parfaite au niveau de la liaison coque-cadre.

De préférence, la cadre est choisi en une matière conductrice de la chaleur et un complément de chaleur est apporté par son intermédiaire.

Eventuellement, pour obtenir une étanchéité encore meilleure, il est possible d'opérer la solidarisation du cadre et de la coque qui est effectuée sous vide, en présence d'un collodion.

Le procédé selon l'invention est particulièrement avantageux lorsque la coque est elle-même obtenue par thermoformage d'une plaque ou d'une feuille. Alors, l'étanchéité propre des coques thermoformées est conservée au niveau de la fixation du cadre.

L'invention concerne également les conteneurs à coques dont le système de fermeture comporte des cadres solidarisés desdites coques par le procédé de l'invention.

Les figures du dessin annexé feront bien comprendre comment l'invention peut être réalisée.

La figure 1 est une vue en perspective d'un conteneur selon l'invention.

La figure 2 illustre le procédé de liaison des cadres de fermeture et des coques du conteneur de la figure 1.

La figure 3 est une coupe selon la ligne III—III de la figure 1.

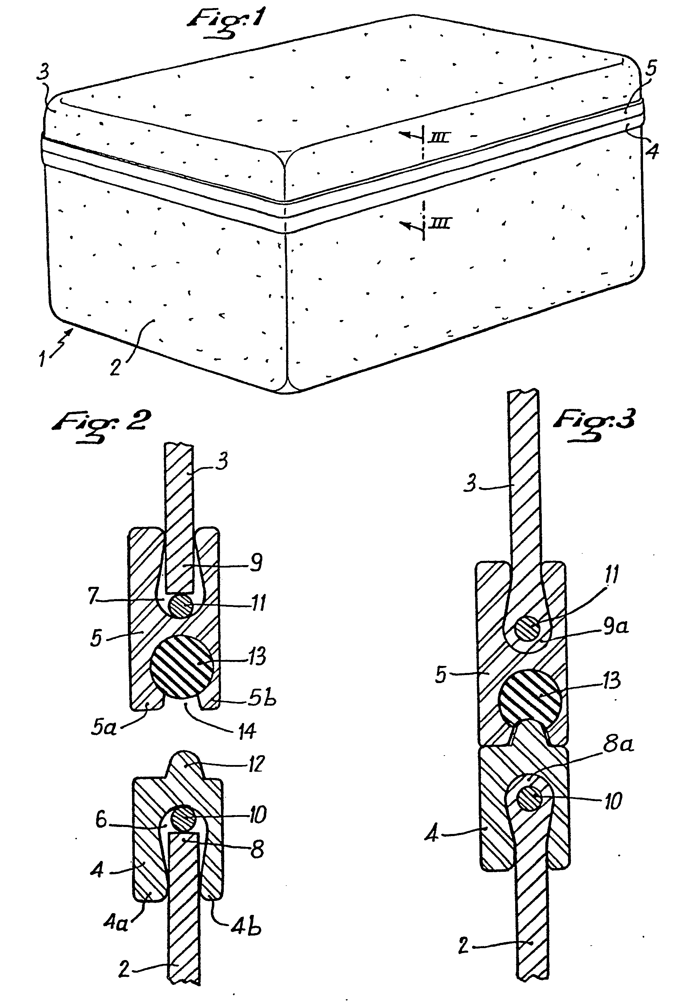

Le conteneur 1 montré par la figure 1 est formé par deux coques 2 et 3 de matière synthétique, obtenues par thermoformage. Le bord de l'ouverture de chaque coque 2 et 3 est solidaire d'un cadre 4 ou 5, respectivement. Les cadres 4 et 5, par exemple en profilés d'aluminium, forment avec des charnières d'articulation et des loquets (non représentés) le dispositif de fermeture du conteneur 1.

Comme le montre la figure 2 (qui correspond à la figure 3 avant solidarisation des coques 2 et 3 avec les cadres 4 et 5 respectivement), chaque cadre 4 ou 5 comporte une gorge périphérique 6 ou 7, de section évasée vers le fond et dans laquelle peut être introduit le bord en regard 8 ou 9 de la coque 2 ou 3 correspondante, de sorte que ceux-ci sont pris entre une partie extérieur 4a ou 5a et une partie intérieure 4b ou 5b dudit cadre.

Préalablement à l'introduction du bord 8 ou 9 des coques 2 et 3 dans les gorges 6 et 7, on dispose dans celles-ci une boucle 10 ou 11 respectivement d'une matière bonne conductrice de la chaleur et de l'électricité, comme un acier ou le cuivre.

Ensuite, par chauffage des boucles 10 et 11 et/ou des cadres 10 et 11, on amène la matière des bords 8 et 9 à une fusion au moins partielle et on presse ces bords fondus contre le fond des gorges 6 et 7 de façon que la matière emprisonne lesdits cadres 10 et 11 et emplisse la totalité de la cavité desdites gorges (voir la figure 3).

Après cessation du chauffage et refroidissement, les cadres 4 et 5 sont respectivement solidarisés de façon étanche avec les coques 2 et 3.

Pour assurer l'étanchéité entre les cadres 4 et 5, on prévoit une saillie périphérique 12, portée par le cadre 4 et susceptible de coopérer avec un joint 13, porté par le cadre 5, à travers un canal 14, les formes des parties en regard des cadres 4 et 5 étant de préférence complémentaires.

Le chauffage des boucles 10 et 11 et/ou des cadres 4 et 5 peut être effectué par induction. Il peut également être réalisé de toute autre façon connue et par exemple par conduction électrique. Dans ce cas, on peut prévoir que les deux extrémités des boucles 10 et 11 fassent saillie, par exemple à l'intérieur de la coque 2 ou 3 correspondante pour être reliée à une source électrique. Après chauffage et refroidissement, ces extrémités saillantes sont coupées et leurs passages éventuellement étanchéifiés.

Ainsi, de ce qui précède, on voit aisément que selon l'invention on peut obtenir des conteneurs particulièrement étanches.

## Revendications

1. Procédé pour la solidarisation étanche d'un cadre rigide (4, 5) sur le bord (8, 9) de l'ouverture d'une coque (2, 3), procédé selon lequel la coque (2, 3) étant en une matière thermoplastique, ledit bord (8, 9) est introduit dans une gorge (6, 7) du cadre de forme correspondante, de façon que ledit bord (8, 9) soit disposé entre une partie de cadre (4b, 5b) intérieure à la coque et une partie de cadre (4a, 5a) extérieure à la coque, puis, après mise en place dudit bord de la coque dans la gorge (6, 7), on procède à une élévation de température permettant à la matière de la coque, voisine du bord, de fondre au moins partiellement, après quoi on laisse cette matière se resolidifier, caractérisé en ce que, avant la mise en place du bord (8, 9) de la coque dans la gorge du cadre (6, 7) on introduit dans celle-ci au moins un élément perdu (10, 11) par l'intermédiaire duquel est effectuée, au moins partiellement, l'élévation de température appliquée à la matière de la coque voisine dudit bord.

2. Procédé selon la revendication 1, caractérisé en ce que le cadre (4, 5) est choisi en une matière conductrice de la chaleur et en ce que un complément de chaleur est apporté par son intermédiaire.

3. Procédé selon l'une des revendications 1 ou 2, caractérisé en ce que la solidarisation du cadre et de la coque est effectuée sous vide, en présence d'un collodion.

4. Conteneur étanche (1) composé de deux coques (2, 3) dont les concavités sont en regard et dont le bord de chacune d'elles est solidarisé d'un cadre rigide (4, 5), lesdits cadres formant le dispositif de fermeture desdits conteneurs, et chacun d'eux étant solidarisé de la coque correspondante selon le procédé de l'une quelconque des revendications 1 à 3.

5. Conteneur selon la revendication 5, caractérisé en ce que lesdites coques (2, 3) sont obtenues par thermoformage.

6. Conteneur selon l'une des revendications 4 ou 5, caractérisé en ce qu'un joint d'étanchéité (13) est prévu entre ses deux cadres.

## Patentansprüche

1. Verfahren zum dichtenden Verbinden eines starren Rahmens (4, 5) auf dem Rand (8, 9) der Öffnung einer Schale (2, 3), wobei die Schale (2, 3) aus thermoplastischen Werkstoff gefertigt ist, der Rand (8, 9) in eine Einkehlung (6, 7) des Rahmens von entsprechender Form eingeführt wird, so daß der Rand (8, 9) zwischen dem Rahmenteil (4b, 5b) im Innern der Schale zu liegen kommt, worauf nach dem Einbringen des Randes der Schale in die Einkehlung (6, 7) die Temperatur angehoben wird, wodurch der Werkstoff der Schale in der Nähe des Randes zumindest teilweise schmelzen und dieser Werkstoff sich dann wieder verfestigen kann, dadurch gekennzeichnet, daß vor dem Einbringen des Randes (8, 9) der Schale in die Einkehlung des Rahmens (6, 7) in diese zumindest ein verlorenes Teil (10, 11) eingeführt wird, mit dem zumindest teilweise die an die Schale in der Nähe des Randes gegebene Temperaturerhöhung vorgenommen wird.

2. Verfahren nach Anspruch 1, dadurch gekennzeichnet, daß für den Rahmen (4, 5) ein die Wärme leitender Werkstoff verwendet wird und daß eine Wärmeergänzung mit dessen Hilfe zugeführt wird.

3. Verfahren nach einem der Ansprüche 1 oder 2, dadurch gekennzeichnet, daß die Verbindung von Rahmen und Schale unter Vakuum in Gegenwart eines Kollodiums durchgeführt wird.

4. Dichter Behälter (1) bestehend aus zwei Schalen (2, 3) mit einander gegenüberliegenden Hohlräumen und bei dem der Rand jeder dieser Schalen fest mit einem starren Rahmen (4, 5) verbunden ist und dieser Rahmen die Verschließvorrichtung der Behälter bildet, von denen jeder Rahmen mit der entsprechenden Schale nach dem Verfahren einer der Ansprüche 1 bis 3 verbunden wird.

5. Behälter nach Anspruch 4, dadurch gekennzeichnet, daß die Schalen 2, 3 durch Warmformgebung hergestellt sind.

6. Behälter nach einem der Ansprüche 4 oder 5, dadurch gekennzeichnet, daß eine Dichtung (13) zwischen beiden Rahmen vorgesehen ist.

## Claims

1. Process for hermetically joining a rigid frame (4, 5) on the edge (8, 9) of the opening of a shell (2, 3), process according to which the shell (2, 3) being made of a thermoplastics material, said edge (8, 9) is introduced into a groove (6, 7) of the frame of corresponding shape, so that said edge (8, 9) is disposed between a part of frame (4b, 5b) inside the shell and a part of frame (4a, 5a) outside the shell, then, after positioning of said edge of the shell in the groove (6, 7), the temperature is raised, enabling the material of the shell, adjacent the edge, to melt at least partially, after which this material is left to solidify again, characterized in that, before positioning of the edge (8, 9) of the shell in the groove of the frame (6, 7), there is introduced thereinto at least one lost element (10, 11) via which the rise in temperature applied to the material of the shell adjacent said edge is effected at least partially.

2. Process according to Claim 1, characterized in that the frame (4, 5) is chosen to be of a heat-conducting material and in that additional heat is brought thereby.

3. Process according to one of Claims 1 or 2, characterized in that joining of the frame and of the shell is effected in vacuo, in the presence of a collodion.

4. Hermetic container (1) composed of two shells (2, 3) of which the concavities are opposite and of which the edge of each of them is joined to a rigid frame (4, 5), said frames forming the device for closing said containers, and each of them being joined to the corresponding shell according to the process of any one of Claims 1 to 3.

5. Container according to Claim 5, characterized in that said shells (2, 3) are obtained by thermoforming.

6. Container according to one of Claims 4 or 5, characterized in that a seal (13) is provided between its two frames.

Fig.1

Fig.2

Fig.3